# EUROPEAN PATENT SPECIFICATION

(11) **EP 4 029 736 B1**
(45) Date of publication and mention of the grant of the patent: **08.03.2023**
(21) Application number: 21151897.2
(22) Date of filing: 15.01.2021
(51) Int. Cl.: B60R 9/02, B60R 9/10, B60R 9/06

(54) **A LOAD CARRIER**
LASTENTRÄGER
SUPPORT DE CHARGE

(43) Date of publication of application: 20.07.2022
(73) Proprietor: Thule Sweden AB, 335 04 Hillerstorp (SE)
(72) Inventor: ALMHILL, Stefan, 562 40 Taberg (SE); LARSSON, Wilhelm, 33155 Värnamo (SE); BERGMAN, Fredrik, 567 92 Vaggeryd (SE); DE MIGUEL, Jose, 554 66 Jönköping (SE)
(74) Representative: Wallentin, Lars

(56) References cited:
- SE-A1- 1 300 427
- US-A1- 2008 110 949
- US-A1- 2019 061 637

## Description

### TECHNICAL FIELD

The present disclosure relates to a load carrier for a vehicle comprising an attachment arrangement for attaching the load carrier at a rearward facing door or tailgate of the vehicle. The present disclosure also relates to a vehicle.

### BACKGROUND OF THE INVENTION

Load carriers for vehicles, such as load carriers for carrying bicycles or any other load, may be attached to a vehicle at different sides of the vehicle. For example, it is well-known to provide bicycle carriers which are attachable on top of the vehicle above the vehicle roof, via e.g. vehicle roof racks. It is also known to attach load carriers at vehicle rearward sides, such that the loads can be provided and stored behind the vehicles.

Load carriers for vehicle rearward sides may be attached directly to the vehicle via an attachment arrangement of the load carrier which comprises one or more attachment members. For certain types of vehicles - including but not limited to minibuses, vans, station wagons and SUV's - it is for example known to attach load carriers to the rearward facing door or tailgate.

An attachment arrangement for such a load carrier may typically comprise two upper attachment members for attaching the load carrier to the vehicle and suspends it thereto via an upper portion of the vehicle at the rearward facing door or tailgate. The attachment arrangement may also comprise at least one lower attachment member for attaching the load carrier to a lower portion of the vehicle at the rearward facing door or tailgate. The lower portion of the vehicle is provided below the at least one upper portion, as seen in a vertical direction of the vehicle, also corresponding to a vertical direction of the attachment arrangement and of the load carrier when attached to the vehicle.

Accordingly, the upper attachment members suspend the load carrier to the vehicle and thereby prevents it from falling off due to gravitational forces. They also typically prevent the attachment arrangement and/or the load carrier from moving out from the vehicle in its rearward direction when attached thereto. The at least one lower attachment member, on the other hand, prevents the attachment arrangement and/or the load carrier from moving upwardly in the vertical direction. Thereby, the load carrier is prevented from releasing due to upwardly acting forces generated when the vehicle e.g. drives over a bump or the like. This is accomplished in that the at least one lower attachment member engages with a downwardly facing edge of the rearward facing door or tailgate. Thus, the downwardly facing edge prevents the at least one lower attachment member from moving upwards when an upwardly directed force is acting on the load carrier. The at least one lower attachment member is typically also designed to prevent the attachment arrangement and/or the load carrier from moving outwards from the vehicle in its rearward direction when attached thereto.

According to its abstract, US 2019/061637 A1 relates to an anchoring assembly which comprises a plate which is elongated, which extends along a respective longitudinal axis of extension and is positioned, when the cycle carrier is installed, for resting on the spoiler and engaging in the region of the upper edge. The fixing device comprises an adapter which is rigid and is fixable to the vehicle using existing holes in the lower region of the rear part.

According to its abstract, US 2008/110949 A1 relates to a panel truck with a material carrier made up of a fixed frame clamped to a rain gutter of the truck and a movable frame that is able to be drawn toward the fixed frame to clamp panels between the frames. The fixed frame is further secured to the truck by a clamp leg that may be drawn toward an interior panel of the truck so as to apply clamping action between the fixed frame against the exterior panel of the truck and the clamp leg against the interior panel. Therefore, the material carrier is easily mounted on the truck and easily removed therefrom without any modification to the truck. Document SE 1 300 427 A1 discloses a load carrier for a vehicle according to the preamble of claim 1.

Even though the above-mentioned attachment arrangement and load carrier provide a reliable and robust attachment, it has been realized that there is still a need to provide further improved attachment arrangements and load carriers. Especially, it has been realized that the above-mentioned attachment arrangement design is not suitable for all types of rearward facing doors and tailgates.

### SUMMARY OF THE INVENTION

In view of the above, an object of the present invention is to provide an improved load carrier which alleviates at least one of the drawbacks of the prior art. More particularly, an object of the present invention is to provide a reliable and robust attachment arrangement for the load carrier. A yet further object of the invention is to provide a vehicle comprising the load carrier.

The object is achieved by the subject-matter of independent claim 1. Advantageous embodiments may be found in the dependent claims and in the accompanying description and drawings.

Thus, according to a first aspect of the invention, a load carrier for a vehicle comprising an attachment arrangement for attaching the load carrier at a rearward facing door or tailgate of the vehicle is provided. The attachment arrangement comprises:
- a first upper attachment member for attaching the load carrier to an upper portion of the vehicle at the rearward facing door or tailgate,
- a first lower attachment member for attaching the load carrier to a lower portion of the vehicle at the rearward facing door or tailgate, the lower portion being provided below the upper portion, as seen in a vertical direction of the vehicle,
wherein the attachment arrangement further comprises an engaging portion being adapted to engage with a first surface of the upper portion of the vehicle when the attachment arrangement is attached to the vehicle, wherein the engaging portion is further adapted to engage with the first surface such that the attachment arrangement is prevented from being moved upwardly in the vertical direction when the attachment arrangement is attached to the vehicle. Accordingly, the first upper attachment member is provided above the first lower attachment member, as seen along a vertical direction of the attachment arrangement, which corresponds to the vertical direction of the vehicle when the attachment arrangement is attached thereto.

By the provision of the attachment arrangement as disclosed herein, an improved attachment arrangement for the load carrier is provided in which a more reliable and robust attachment of the load carrier to the vehicle may be achieved. In particular, the present invention is based on a realization that it may be advantageous, for at least some vehicle designs, to provide an attachment arrangement for the load carrier where upwardly directed forces on the load carrier can be accommodated by the upper portion of the vehicle. Accordingly, the engaging portion of the attachment arrangement is as mentioned herein adapted to engage with the first surface of the upper portion such that it prevents the attachment arrangement and the load carrier from releasing when e.g. driving over a bump. In addition, by the configuration of the attachment arrangement as disclosed herein, a larger design freedom for the first lower attachment member is enabled. For example, the first lower attachment member, or any other lower attachment member, may thereby not necessarily be designed to engage with and grip around an at least partly downwardly facing edge of the rearward facing door or tailgate, as known in the prior art. Still further, it has also been realized that for vehicles equipped with a rearward facing spoiler at the top of the rearward facing door or tailgate, the engaging portion may advantageously engage with an at least partly downwardly facing surface of the spoiler, thereby preventing the attachment arrangement and the load carrier from releasing due to an upwardly directed force generated when e.g. the vehicle drives over a bump. As such, by the present invention, the attachment arrangement advantageously utilizes the shape of the rear spoiler for accommodating upwardly directed forces.

Optionally, the engaging portion may be part of the first upper attachment member. Thereby, a simplified configuration may be achieved, implying cost-efficiency, since the engaging portion forms part of, or is integrated with, the first upper attachment member. Accordingly, even though the engaging portion according to one embodiment may be provided separate from the first upper attachment member, it has been realized that the engaging portion being part of the first upper attachment member provides benefits, such as simplified design, cost-efficiency and facilitated mounting by a user. According to an embodiment when the engaging portion is separate from the first attachment member, a smallest distance between the engaging portion and the first upper attachment member, as seen along the vertical direction of the attachment arrangement, may be 30 centimeters (cm), 25 cm, 20 cm, 15 cm, 10 cm, 5 cm or less. Alternatively, or additionally, the engaging portion may be adapted to engage with any surface of the upper portion which is above the lower portion of the vehicle, as seen along the vertical direction. As such, the engaging portion is thereby offset from and provided above the first lower attachment member, as seen along the vertical direction.

Optionally, the engaging portion may comprise a first counteracting surface adapted to engage with the first surface, wherein the first counteracting surface is adapted to face the first surface at least partly upwardly in the vertical direction when the attachment arrangement is attached to the vehicle.

Optionally, the first upper attachment member may comprise an upper grip member for gripping on a second surface of the upper portion of the vehicle, the second surface being spaced apart from the first surface and/or being oriented in a different direction with respect to the first surface, wherein the upper grip member is adapted to grip the second surface such that the attachment arrangement is suspended on the vehicle via the first upper attachment member. Being oriented in a different direction may herein mean that the surface is facing away from the upper portion in a different direction, e.g. a normal of a plane defined by the second surface is directed differently to a normal of a plane defined by the first surface. Preferably, the above-mentioned first counteracting surface of the engaging portion is provided vertically below the upper grip member. Still optionally, when the engaging portion is part of the first upper attachment member, the first upper attachment member is preferably formed to partly enclose the upper portion. Purely by way of example, the first upper attachment member may be substantially U-formed or C-formed, as seen in a sectional view defined by the vertical direction and a longitudinal direction of the attachment arrangement, corresponding to a longitudinal direction of the vehicle when the attachment arrangement is attached thereto. As such, the U-formed or C-formed first upper attachment member may partly enclose the upper portion, such as a rear spoiler of the vehicle.

Optionally, the upper grip member may be a hook member.

Optionally, at least one of the upper grip member and the engaging portion may be adjustable by allowing a translating movement between the upper grip member and the engaging portion and/or by allowing a pivoting movement about a pivot axis with respect to the upper grip member. Thereby, the attachment arrangement may be adapted for different sizes and/or dimensions of different upper portions, implying increased versatility for the attachment arrangement, enabling the attachment arrangement to e.g. be attached to different types of vehicles. The adjustability has also shown to facilitate mounting of the attachment arrangement to the vehicle. Still optionally, the first upper attachment member may be adapted to be tightened to the upper portion of the vehicle by adjusting at least one of the upper grip member and the engaging portion, i.e. by allowing a translating and/or a pivoting movement. As such, the tightening may provide a more reliable and robust connection and locking to the vehicle, reducing the risk that the attachment arrangement falls of due to e.g. vibrations during driving.

Optionally, the engaging portion may be formed to enclose an edge of the upper portion, such as substantially L-formed. The engaging portion enclosing an edge may imply a more reliable and robust connection to the upper portion. For example, the risk that the attachment arrangement is released caused by vibrations during driving may thereby be reduced.

Optionally, the engaging portion may further comprise a second counteracting surface adapted to engage with a third surface of the upper portion, wherein the second counteracting surface is adapted to face the third surface at least partly downwardly along the vertical direction when the attachment arrangement is attached to the vehicle. Thereby a further improved grip to the upper portion may be achieved, in that the second counteracting surface engages with the third surface when the attachment arrangement is attached to the vehicle. For example, the engaging portion may thereby better absorb and handle vibrations during driving of the vehicle. The second counteracting surface of the engaging portion is preferably provided in-between the upper grip member and the first counteracting surface, as seen along the vertical direction.

Optionally, when the engaging portion is adjustable by allowing a pivoting movement about the pivot axis with respect to the upper grip member, the first upper attachment member may comprise a stop surface adapted to prevent the engaging portion from being pivoted about the pivot axis when the first lower attachment member is attached to the lower portion of the vehicle. Thereby, a safer and more secure attachment may be achieved, requiring that the first lower attachment member is not attached to the vehicle and thereby movable therefrom in order to allow the pivoting movement of the engaging portion about the pivot axis. Preferably, the first upper attachment member may in such an embodiment only be detachable from the vehicle by allowing a pivoting movement of the engaging portion about the pivot axis. Accordingly, according to an embodiment, the first upper attachment member and/or the engaging portion may be adapted such that the engaging portion is only allowed to be pivoted about the pivot axis, to thereby release the first upper attachment member from the vehicle, when the first upper attachment member is pivoted by moving the first lower attachment member away from the vehicle.

Optionally, the upper grip member may be rigidly fixed to or constitute an integrated part of the first upper attachment member and/or the attachment arrangement.

Optionally, the attachment arrangement may comprise a second upper attachment member for attaching the load carrier to the upper portion of the vehicle, wherein the second upper attachment member is provided offset from the first upper attachment member, as seen in a transverse direction of the attachment arrangement, and wherein the second upper attachment member is preferably configured as the first upper attachment member.

According to the invention, the first lower attachment member is formed to enclose a vertical edge of the lower portion of the vehicle when attached thereto, such that the first lower attachment member prevents the attachment arrangement from moving in at least one transverse direction of the vehicle when attached to the vehicle. Optionally, the first lower attachment member may be formed to enclose a vertical edge of the lower portion of the vehicle when attached thereto such that it prevents the first lower attachment member from moving outwards in the longitudinal direction from the vehicle when attached thereto. The transverse direction of the vehicle corresponds to a transverse direction of the attachment arrangement when attached thereto. According to an example embodiment, the attachment arrangement may comprise a second lower attachment member for attaching the load carrier to the lower portion of the vehicle, wherein the second lower attachment member is provided offset from the first lower attachment member, as seen in the transverse direction of the attachment arrangement, and wherein the second lower attachment member is preferably configured as the first lower attachment member. Optionally, the second lower attachment member is formed to enclose an edge of the lower portion of the vehicle when attached thereto, such that the second lower attachment member prevents the attachment arrangement from moving in at least one transverse direction of the vehicle when attached to the vehicle and/or such that it prevents the second lower attachment member from moving outwards in the longitudinal direction from the vehicle when attached thereto. The first and second lower attachment members are in an embodiment preferably formed to prevent the attachment arrangement from moving in both transverse directions.

Optionally, the load carrier is a bicycle carrier. Accordingly, the load carrier may be configured to carry one or more bicycles, which will be provided behind the vehicle when the load carrier is attached thereto by the attachment arrangement.

Optionally, the load carrier may be configured to be mounted to the vehicle by a pivoting movement of the attachment arrangement with respect to the vehicle. Preferably, the attachment arrangement may be configured to first be attached to the upper portion of the vehicle by at least the first upper attachment member, and thereafter followed by the pivoting movement of the attachment arrangement until at least the first lower attachment member is in contact with the lower portion of the vehicle.

According to a second aspect of the present invention, the object is achieved by a vehicle according to claim 15. Thus, a vehicle is provided comprising a rearward facing door or tailgate, an upper portion and a lower portion at the rearward facing door or tailgate, and further comprising the attachment arrangement according to any one of the embodiments of the first aspect. It shall be noted that all embodiments of the first aspect of the invention are applicable to all embodiments of the second aspect of the invention and vice versa. Further, advantages and effects of the second aspect of the invention are largely analogous to advantages and effects of the first aspect of the invention. The upper portion is a vehicle rear spoiler.

### BRIEF DESCRIPTION OF THE DRAWINGS

With reference to the appended drawings, below follows a more detailed description of embodiments of the invention cited as examples.

In the drawings:
Fig. 1a shows a perspective view and fig. 1b shows a side view of an attachment arrangement and a load carrier according to an example embodiment of the present invention when attached at a rearward facing door or tailgate of a vehicle;
Fig. 1c shows an enlarged perspective view of the first upper attachment member as shown in figs. 1a-b;
Figs. 2a and 2b show perspective views of a first upper attachment member according to an example embodiment of the present invention; and
Figs. 3a, 3b, 3c and 3d show sectional views of an upper attachment member according to another example embodiment of the present invention.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

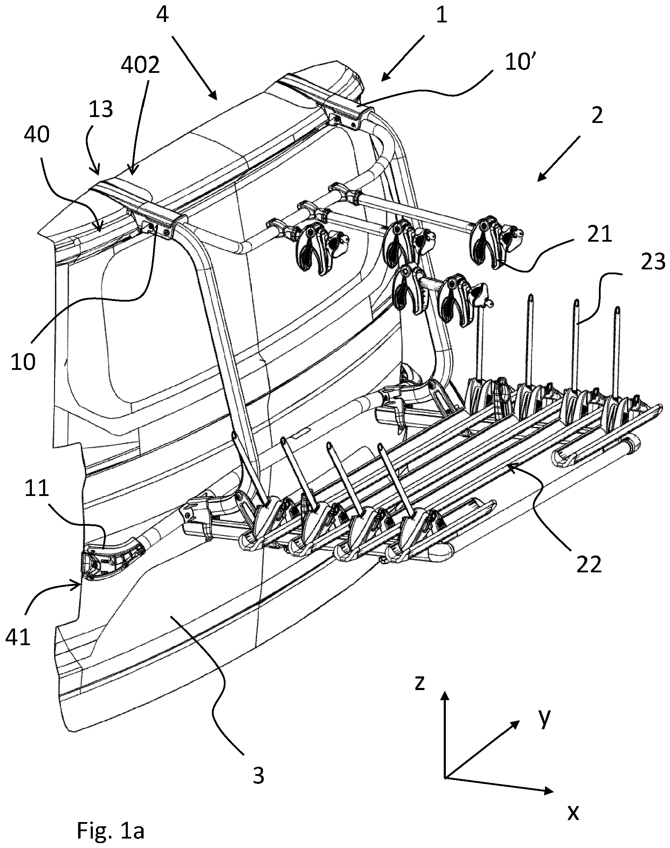

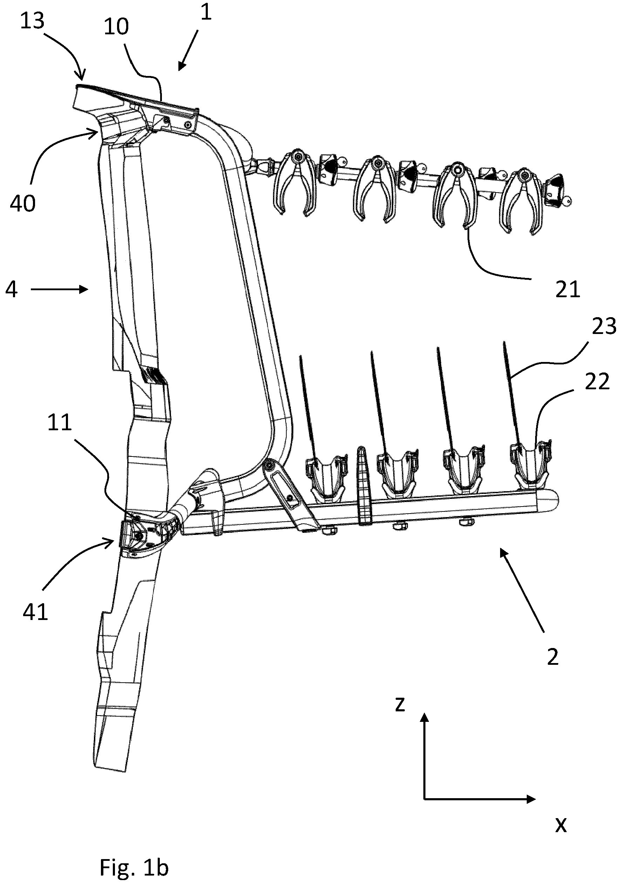

In fig. 1a, a perspective view of an attachment arrangement 1 and a load carrier 2 when attached at a rearward facing door or tailgate 3 of a vehicle 4 is shown. Fig. 1b shows a side view of the attachment arrangement 1 and the load carrier 2 as shown in fig 1a. A rear portion of the vehicle 4 is shown, and the vehicle 4 is in this embodiment a minibus or minivan. The tailgate 3 is openable, and mainly extends in a vertical direction z of the vehicle 4 when the tailgate 3 is closed, forming a substantially vertical rearward facing wall. The extensions and directions as used herein refer to extensions of the vehicle 4, and of the attachment arrangement 1 and the load carrier 2 when attached to the vehicle 4. Accordingly, the z-direction is a vertical direction corresponding to a vertical line extending from a flat horizontally extending floor when the vehicle 4 is provided thereon. The y-direction corresponds to a transverse direction of the vehicle 4, and of the attachment arrangement 1 and the load carrier 2 when attached to the vehicle 4. The x-direction corresponds to a longitudinal direction of the vehicle 4, which also is a driving direction for the vehicle 4. More specifically, the x-direction here points in a rearward direction of the vehicle 4. The x-direction is also the longitudinal direction of the attachment arrangement 1 and the load carrier when attached to the vehicle 4. The x, y and z directions are here part of a Cartesian coordinate system.

The load carrier 2 as shown is a bicycle carrier for carrying bicycles. In the shown embodiment, the bicycle carrier 2 comprises a number of claws 21 for gripping respective bicycle frames and a number of transversely extending support rails 22 for receiving and supporting bicycle wheels of the bicycles (not shown). The bicycles are locked to the load carrier 2 by tightening the claws 21 around the frames, and also by tightening straps 23 for the bicycle wheels, so that the bicycle wheels are not released from the support rails 22 during driving of the vehicle 4. It shall be understood that this is only one example of a load carrier 2, and that the load carrier 2 could be configured differently without departing from the scope of the invention. For example, the load carrier 2 could be used for carrying any other type of load, such as a storage box, skies etc.

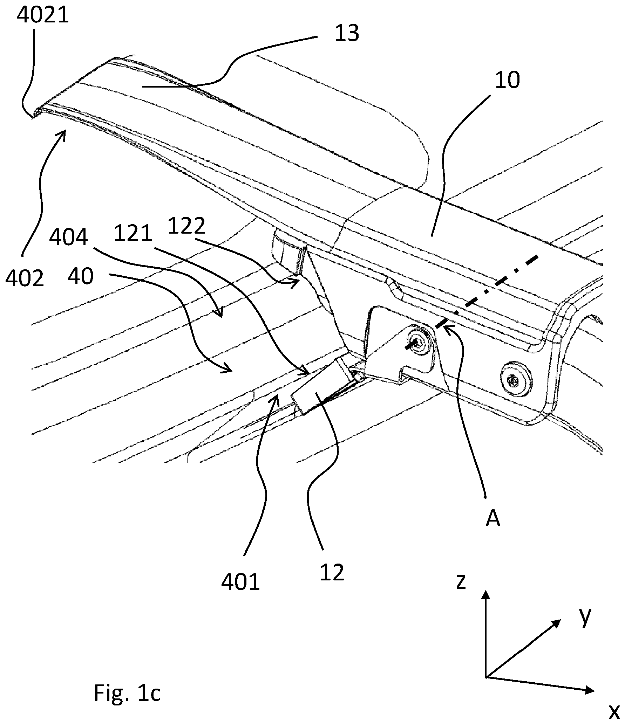

The attachment arrangement 1 comprises a first upper attachment member 10 for attaching the load carrier 2 to an upper portion 40 of the vehicle 4 at the rearward facing door or tailgate 3. The first upper attachment member 10 in figs. 1a-b is shown in an enlarged view in fig. 1c. The upper portion 40 is in the shown embodiment at least partly a rear spoiler of the vehicle 4, but it could be any other portion provided vertically above and offset from a lower portion 41 of the vehicle 4. The attachment arrangement 1 further comprises a first lower attachment member 11 for attaching the load carrier to the lower portion 41 of the vehicle 4 at the rearward facing door or tailgate 3. The lower portion 41 is provided below the upper portion 40, as seen in the vertical direction z of the vehicle 4. Accordingly, the first upper attachment member 10 is provided above the first lower attachment member 11, as seen in the vertical direction z of the attachment arrangement 1.

In the shown embodiment, the attachment arrangement 1 further comprises a second upper attachment arrangement 10' for attaching the load carrier 2 to the upper portion 40 of the vehicle 4. The second upper attachment member 10' is provided offset from the first upper attachment member 10, as seen in the transverse direction y of the attachment arrangement 1. In addition, in the shown embodiment, the second upper attachment member 10' is configured as the first upper attachment member 10. It shall be however understood that the second upper attachment member 10' may alternatively be configured differently.

The attachment arrangement 1 further comprises an engaging portion 12 which is adapted to engage with a first surface 401 of the upper portion 40 of the vehicle 4 when the attachment arrangement 1 is attached to the vehicle 4. The engaging portion 12 is further adapted to engage with the first surface 401 such that the attachment arrangement 1 is prevented from being moved upwardly in the vertical direction z when the attachment arrangement 1 is attached to the vehicle 4.

As shown in e.g. figs. 1a-c, the engaging portion 12 may be part of the first upper attachment member 10.

Further, the engaging portion 12 as shown comprises a first counteracting surface 121 adapted to abut the first surface 401. The counteracting surface 121 is adapted to face the first surface 401 at least partly upwardly in the vertical direction z when the attachment arrangement 1 is attached to the vehicle 4. Thereby the engaging portion 12 will prevent the attachment arrangement 1, and consequently also the load carrier 2, from moving upwards in the z-direction when the vehicle 4 e.g. drives over a bump.

The first upper attachment member 10 further comprises an upper grip member 13 for gripping on a second surface 402 of the upper portion 40 of the vehicle 4. The second surface 402 is spaced apart from the first surface 401 and is also oriented in a different direction with respect to the first surface 401. As shown, the second surface 402 is facing and directed substantially upwardly in the z-direction. The first surface 401, on the other hand, is facing and directed downwardly, opposite to the z-direction, and also directed away from the vehicle 4 in the x-direction. The upper grip member 13 is adapted to grip the second surface 402 such that the attachment arrangement 1 is suspended on the vehicle 4 via the first upper attachment member 10. The second surface 402 of the upper portion 40 is here in the form of an upper surface of the tailgate 3 which also comprises a gripping edge 4021 for the grip member 13. In the shown embodiment, the grip member 13 is a hook member which engages with the gripping edge 4021 of the upper surface 402 of the tailgate 3. As shown, the second surface 402 is provided vertically above the first surface 401. Accordingly, the upper grip member 13 is therefore also provided vertically above the engaging portion 12. The first upper attachment member 10 as shown in fig. 1c is substantially U-formed or C-formed, as seen in a sectional view defined by the vertical direction z and the longitudinal direction x of the attachment arrangement 1.

Further, in the embodiment shown in fig. 1c, the engaging portion 12 is adjustable by allowing a pivoting movement about a pivot axis A with respect to the upper grip member 13. The pivot axis A as shown extends in the y-direction, i.e. the transverse direction of the attachment arrangement 1. By pivoting the engaging portion 12 towards the upper grip member 13, the first upper attachment member 10 can be tightened to the upper portion 40. In a similar manner, by pivoting the engaging portion 12 away from the upper grip member 13, the first upper attachment member 10 can be opened and thereby released from the upper portion 40. The tightening/releasing may be performed by use of a separate tool (not shown) for a user. In an embodiment, the engaging portion 12 may be biased, such as spring-biased, towards the opened state or towards the closed tightened state.

The engaging portion 12 further comprises a second counteracting surface 122 adapted to engage with a third surface 404 of the upper portion 40, wherein the second counteracting surface 122 is adapted to face the third surface 404 at least partly downwardly along the vertical direction z when the attachment arrangement 1 is attached to the vehicle 4.

As shown, the upper grip member 13 may constitute an integrated part of the first upper attachment member 10 and be rigidly fixed to the attachment arrangement 1.

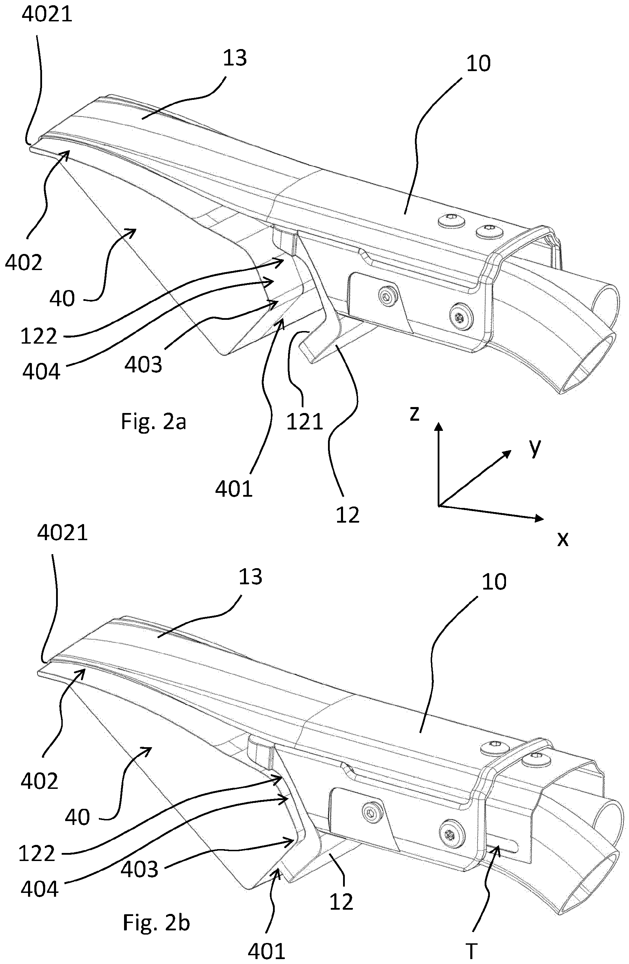

With respect to figs. 2a-b, another embodiment of a first upper attachment member 10 is shown. The first upper attachment member 10 is similar in configuration to the first upper attachment member 10 shown in figs. 1a-c, with the difference that instead of providing adjustability by a pivoting movement, the adjustability is allowed by a translational movement between the upper grip member 13 and the engaging portion 12. The engaging portion 12 may as shown be substantially L-formed, as seen in a sectional plane defined by the z-axis and the x-axis. The engaging portion 12 is thereby formed to enclose an edge 403 of the upper portion 40, in this case an outer edge of the rear spoiler. Fig. 2a shows when the first upper attachment member 10 is in a released, i.e. open, state. Fig. 2b shows when the first upper attachment member 10 is tightened, i.e. in a closed state, with respect to the upper portion 40. The translational movement between the upper grip member 13 and the engaging portion 12 is here performed along the x-axis, i.e. in the longitudinal direction. This movement may for example be performed by applying direct hand force, and/or by use of a tool (not shown). In the shown embodiment, the upper grip member 13 is configured to be translated by sliding in a track T. The track T is here in the form of a slot extending in the longitudinal direction x, wherein e.g. a pin (not shown), associated with the upper grip member 13, is adapted to be moved in the slot. Similar to the above, in an embodiment, the engaging portion 12 may be biased, such as spring-biased, towards the opened state or towards the closed state. Further, in the shown embodiment, similar to the embodiment shown in fig. 1c, the engaging portion 12 further comprises a second counteracting surface 122 adapted to engage with a third surface 404 of the upper portion 40, wherein the second counteracting surface 122 is adapted to face the third surface 404 at least partly downwardly along the vertical direction z when the attachment arrangement 1 is attached to the vehicle 4.

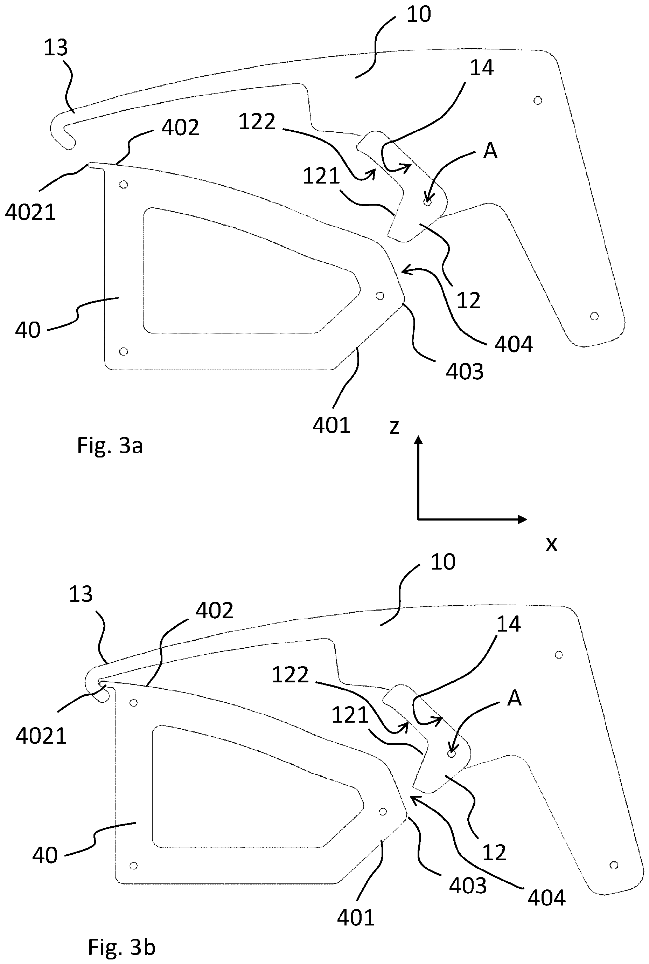

Figs. 3a-d show another embodiment of a first upper attachment member 10 according to the present invention. The same reference numbers as in figs. 1 and 2 are used to denote same or similar features. The figs. show the first upper attachment member 10 in a sectional view defined by the x-axis and the z-axis, i.e. the longitudinal direction and the vertical direction. The upper portion 40 is also here a rear spoiler of the vehicle 4. The first upper attachment member 10 is similar in configuration as e.g. the member 10 shown in fig. 1c. More specifically, the engaging portion 12 is adjustable by allowing a pivoting movement about a pivot axis A, which axis extends in the transverse direction y of the attachment arrangement 1. The first upper attachment member 10 as shown comprises a stop surface 14 adapted to prevent the engaging portion 12 from being pivoted about the pivot axis A when the first lower attachment member 11 is attached to the lower portion 41 of the vehicle 4. The engaging portion 12 is substantially L-formed, similar to the configuration shown in figs. 2a-b, i.e. it is formed to enclose an edge 403 of the upper portion 40, also in this case an outer edge of the rear spoiler. Further, in the shown embodiment, similar to the above, the engaging portion 12 further comprises a second counteracting surface 122 adapted to engage with a third surface 404 of the upper portion 40, wherein the second counteracting surface 122 is adapted to face the third surface 404 at least partly downwardly along the vertical direction z when the attachment arrangement 1 is attached to the vehicle 4.

The first upper attachment member 10 and the engaging portion 12 is adapted such that the engaging portion 12 is only allowed to be pivoted about the pivot axis A, to thereby release the first upper attachment member 10 from the vehicle 4, when the first upper attachment member 10 is pivoted by moving the first lower attachment member 11 away from the vehicle 4. By moving the first lower attachment member 11 away from the vehicle 4, the first upper attachment member 10 will be pivoted about the gripping edge 4021. In figs. 3a-d, this corresponds to a counterclockwise movement. Similar to the above, in an embodiment, the engaging portion 12 may be biased, such as spring-biased, towards the opened state or towards the closed state.

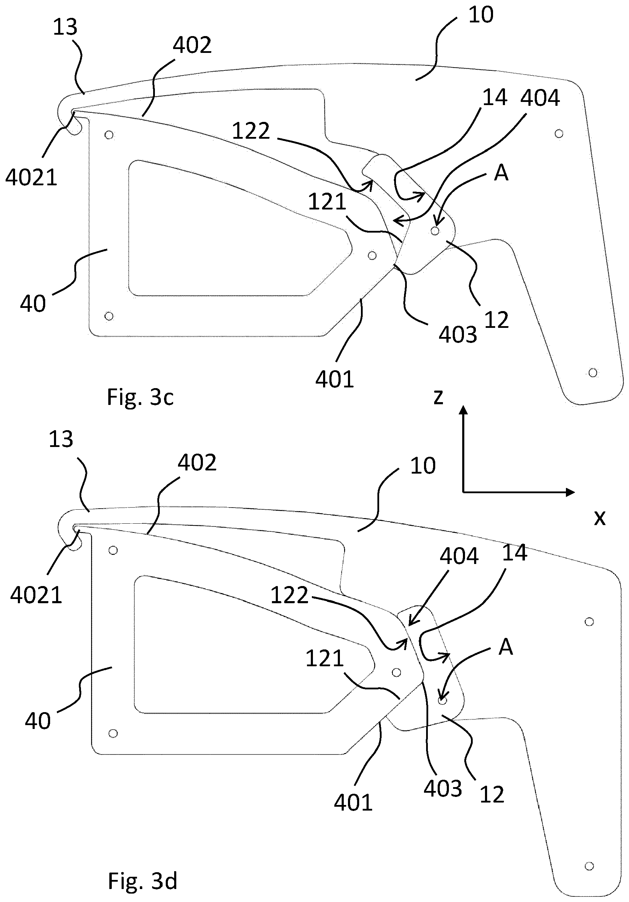

Figs. 3a-d show a sequence of steps for attaching the first upper attachment member 10 to the vehicle 4. First, in fig, 3a, the first upper attachment member 10 is in a completely released state, i.e. it is not in contact with the upper portion 40. Secondly, in fig. 3b, the upper grip member 13, and its hook, engages with the gripping edge 4021. Thereafter, in fig. 3c, the first upper attachment member 10 is moved clockwise so that the engaging portion 12 passes over, or slides over, the edge 403. This movement preferably requires that the engaging portion 12 is first pivoted about the pivot axis A, in the opposite direction, i.e. the counterclockwise direction. Finally, while the first upper attachment member 10 moves in the clockwise direction towards its attached state, as shown in fig. 3d, the engaging portion 12 is also pivoted in the clockwise direction until it engages with the stop surface 14. The release process is performed similarly, but in the opposite directions. It shall be understood that the clockwise and counterclockwise rotations as mentioned herein refer to the embodiments and drawings as shown. Accordingly, the skilled person will realize that the rotations would be different if e.g. the drawings would be mirrored.

The load carriers 2 shown in figs. 1-3 are configured to be mounted to the vehicle 4 by a pivoting movement of the attachment arrangement 1 with respect to the vehicle 4. More specifically, the attachment arrangement 1 is configured to first be attached to the upper portion 40 of the vehicle 4 by the first upper attachment member 10 and by the second upper attachment member 10', and thereafter followed by the pivoting movement about the y-axis of the attachment arrangement 1 until at least the first lower attachment member 11 is in contact with the lower portion 41 of the vehicle 4. According to an alternative embodiment, the load carrier 2 may be attached to the vehicle 4 by a substantially translating movement along the x-axis.

It is to be understood that the present invention is not limited to the embodiments described above and illustrated in the drawings; rather, the skilled person will recognize that many changes and modifications may be made within the scope of the appended claims.

## Claims

1. A load carrier (2) for a vehicle (4) comprising an attachment arrangement (1) for attaching the load carrier (2) at a rearward facing door or tailgate (3) of the vehicle (4), the attachment arrangement (1) comprising,
- a first upper attachment member (10) for attaching the load carrier to an upper portion (40) of the vehicle at the rearward facing door or tailgate, wherein the upper portion is a vehicle rear spoiler,
- a first lower attachment member (11) for attaching the load carrier to a lower portion (41) of the vehicle at the rearward facing door or tailgate, the lower portion (41) being provided below the upper portion (40), as seen in a vertical direction (z) of the vehicle, wherein the first upper attachment member (10) is provided above the first lower attachment member (11), as seen along a vertical direction (z) of the attachment arrangement (1), which corresponds to the vertical direction (z) of the vehicle (4) when the attachment arrangement (1) is attached thereto,
wherein the attachment arrangement (1) further comprises an engaging portion (12) being adapted to engage with a first surface (401) of the upper portion (40) of the vehicle (4) when the attachment arrangement (1) is attached to the vehicle (4), wherein the engaging portion (12) is further adapted to engage with the first surface (401) such that the attachment arrangement (1) is prevented from being moved upwardly in the vertical direction (z) when the attachment arrangement (1) is attached to the vehicle (4),
**characterized in that,**
the first lower attachment member (11) is formed to enclose a vertical edge of the lower portion (41) of the vehicle (4) when attached thereto, such that the first lower attachment member (11) prevents the attachment arrangement (1) from moving in at least one transverse (y) direction of the vehicle (4) when attached to the vehicle (4).

2. The load carrier (2) according to claim 1, wherein the engaging portion (12) is part of the first upper attachment member (10).

3. The load carrier (2) according to any one of the preceding claims, wherein the engaging portion (12) comprises a first counteracting surface (121) adapted to engage with the first surface (401), wherein the first counteracting surface (121) is adapted to face the first surface (401) at least partly upwardly in the vertical direction (z) when the attachment arrangement (1) is attached to the vehicle (4).

4. The load carrier (2) according to any one of the preceding claims, wherein the first upper attachment member (10) comprises an upper grip member (13) for gripping on a second surface (402) of the upper portion (40) of the vehicle (4), the second surface (402) being spaced apart from the first surface (401) and/or being oriented in a different direction with respect to the first surface (401), wherein the upper grip member (13) is adapted to grip the second surface (402) such that the attachment arrangement (1) is suspended on the vehicle (4) via the first upper attachment member (10).

5. The load carrier (2) according to claim 4, wherein the upper grip member (13) is a hook member.

6. The load carrier (2) according to any one of claims 4-5, wherein at least one of the upper grip member (13) and the engaging portion (12) is adjustable by allowing a translating movement between the upper grip member (13) and the engaging portion (12) and/or by allowing a pivoting movement about a pivot axis (A) with respect to the upper grip member (13).

7. The load carrier (2) according to claim 6, wherein the first upper attachment member (10) is adapted to be tightened to the upper portion (40) of the vehicle (4) by adjusting at least one of the upper grip member (13) and the engaging portion (12).

8. The load carrier (2) according to any one of claims 6-7, wherein the engaging portion (12) is formed to enclose an edge (403) of the upper portion (40), such as substantially L-formed.

9. The load carrier (2) according to claim 8, wherein the engaging portion (12) further comprises a second counteracting surface (122) adapted to engage with a third surface (404) of the upper portion (40), wherein the second counteracting surface (122) is adapted to face the third surface (404) at least partly downwardly along the vertical direction (z) when the attachment arrangement (1) is attached to the vehicle (4).

10. The load carrier (2) according to any one of claims 6-9, wherein the engaging portion (12) is adjustable by allowing a pivoting movement about the pivot axis (A) with respect to the upper grip member (13), and wherein the first upper attachment member (10) comprises a stop surface (14) adapted to prevent the engaging portion (12) from being pivoted about the pivot axis (A) when the first lower attachment member (11) is attached to the lower portion (41) of the vehicle (4).

11. The load carrier (2) according to claims 8, 9 or 10, wherein the first upper attachment member (10) and/or the engaging portion (12) is adapted such that the engaging portion (12) is only allowed to be pivoted about the pivot axis (A), to thereby release the first upper attachment member (10) from the vehicle (4), when the first upper attachment member (10) is pivoted by moving the first lower attachment member (11) away from the vehicle (4).

12. The load carrier (2) according to any one of claims 4-11, wherein the upper grip member (13) is rigidly fixed to or constitutes an integrated part of the first upper attachment member (10) and/or the attachment arrangement (1).

13. The load carrier (2) according to any one of the preceding claims, comprising a second upper attachment member (10') for attaching the load carrier to the upper portion (40) of the vehicle (4), wherein the second upper attachment member (10') is provided offset from the first upper attachment member (10), as seen in a transverse direction of the attachment arrangement (1), and wherein the second upper attachment member (10') is preferably configured as the first upper attachment member (10).

14. The load carrier (2) according to any one of the preceding claims, wherein the load carrier is a bicycle carrier.

15. A vehicle (1) comprising a rearward facing door or tailgate (3), an upper portion (40) and a lower portion (41) at the rearward facing door or tailgate, and further comprising the load carrier (2) according to any one of the preceding claims.

## Patentansprüche

1. Lastträger (2) für ein Fahrzeug (4), umfassend eine Befestigungsanordnung (1) zum Befestigen des Lastträgers (2) an einer nach hinten gewandten Tür oder Klappe (3) des Fahrzeugs (4), die Befestigungsanordnung (1) umfassend,
- ein erstes oberes Befestigungselement (10) zum Befestigen des Lastträgers an einem oberen Abschnitt (40) des Fahrzeugs an der nach hinten gewandten Tür oder Klappe, wobei der obere Abschnitt ein Fahrzeugheckspoiler ist,
- ein erstes unteres Befestigungselement (11) zum Befestigen des Lastträgers an einem unteren Abschnitt (41) des Fahrzeugs an der nach hinten gewandten Tür oder Klappe, wobei der untere Abschnitt (41) unterhalb des oberen Abschnitts (40), wie in einer vertikalen Richtung (z) des Fahrzeugs gesehen, bereitgestellt ist, wobei das erste obere Befestigungselement (10) oberhalb des ersten unteren Befestigungselements (11) bereitgestellt ist, wie entlang einer vertikalen Richtung (z) der Befestigungsanordnung (1), die der vertikalen Richtung (z) des Fahrzeugs (4) entspricht, wenn die Befestigungsanordnung (1) daran befestigt ist, gesehen,
wobei die Befestigungsanordnung (1) ferner einen Eingriffsabschnitt (12) umfasst, der angepasst ist, um mit einer ersten Oberfläche (401) des oberen Abschnitts (40) des Fahrzeugs (4) in Eingriff zu stehen, wenn die Befestigungsanordnung (1) an dem Fahrzeug (4) befestigt ist, wobei der Eingriffsabschnitt (12) ferner angepasst ist, um mit der ersten Oberfläche (401) derart in Eingriff zu stehen, dass die Befestigungsanordnung (1) gehindert wird, in der vertikalen Richtung (z) nach oben bewegt zu werden, wenn die Befestigungsanordnung (1) an dem Fahrzeug (4) befestigt ist,
**dadurch gekennzeichnet, dass**
das erste untere Befestigungselement (11) ausgebildet ist, um eine vertikale Kante des unteren Abschnitts (41) des Fahrzeugs (4), wenn es daran befestigt ist, derart zu umschließen, dass das erste untere Befestigungselement (11) die Befestigungsanordnung (1) hindert, sich in mindestens einer transversalen (y) Richtung des Fahrzeugs (4) zu bewegen, wenn sie an dem Fahrzeug (4) befestigt ist.

2. Lastträger (2) nach Anspruch 1, wobei der Eingriffsabschnitt (12) Teil des ersten oberen Befestigungselements (10) ist.

3. Lastträger (2) nach einem der vorstehenden Ansprüche, wobei der Eingriffsabschnitt (12) eine erste entgegenwirkende Oberfläche (121), die angepasst ist, um mit der ersten Oberfläche (401) in Eingriff zu stehen, umfasst, wobei die erste entgegenwirkende Oberfläche (121) angepasst ist, um der ersten Oberfläche (401) mindestens teilweise nach oben in der vertikalen Richtung (z) zugewandt zu sein, wenn die Befestigungsanordnung (1) an dem Fahrzeug (4) befestigt ist.

4. Lastträger (2) nach einem der vorstehenden Ansprüche, wobei das erste obere Befestigungselement (10) ein oberes Griffelement (13) zum Greifen auf einer zweiten Oberfläche (402) des oberen Abschnitts (40) des Fahrzeugs (4) umfasst, wobei die zweite Oberfläche (402) von der ersten Oberfläche (401) beabstandet ist und/oder in einer anderen Richtung hinsichtlich der ersten Oberfläche (401) orientiert ist, wobei das obere Griffelement (13) angepasst ist, um die zweite Oberfläche (402) derart zu greifen, dass die Befestigungsanordnung (1) über das erste obere Befestigungselement (10) auf dem Fahrzeug (4) aufgehängt ist.

5. Lastträger (2) nach Anspruch 4, wobei das obere Griffelement (13) ein Hakenelement ist.

6. Lastträger (2) nach einem der Ansprüche 4 bis 5, wobei mindestens eines von dem oberen Griffelement (13) und dem Eingriffsabschnitt (12) durch Erlauben einer Translationsbewegung zwischen dem oberen Griffelement (13) und dem Eingriffsabschnitt (12) und/oder durch Erlauben einer Schwenkbewegung um eine Schwenkachse (A) herum hinsichtlich des oberen Griffelements (13) einstellbar ist.

7. Lastträger (2) nach Anspruch 6, wobei das erste obere Befestigungselement (10) angepasst ist, um durch Einstellen von mindestens einem von dem oberen Griffelement (13) und dem Eingriffsabschnitt (12) an dem oberen Abschnitt (40) des Fahrzeugs (4) angezogen zu werden.

8. Lastträger (2) nach einem der Ansprüche 6 bis 7, wobei der Eingriffsabschnitt (12) ausgebildet ist, wie im Wesentlichen L-ausgebildet, um eine Kante (403) des oberen Abschnitts (40) zu umschließen.

9. Lastträger (2) nach Anspruch 8, wobei der Eingriffsabschnitt (12) ferner eine zweite entgegenwirkende Oberfläche (122) umfasst, die angepasst ist, um mit einer dritten Oberfläche (404) des oberen Abschnitts (40) in Eingriff zu stehen, wobei die zweite entgegenwirkende Oberfläche (122) angepasst ist, um der dritten Oberfläche (404) mindestens teilweise nach unten entlang der vertikalen Richtung (z) zugewandt zu sein, wenn die Befestigungsanordnung (1) an dem Fahrzeug (4) befestigt ist.

10. Lastträger (2) nach einem der Ansprüche 6 bis 9, wobei der Eingriffsabschnitt (12) durch Erlauben einer Schwenkbewegung um die Schwenkachse (A) herum hinsichtlich des oberen Griffelements (13) einstellbar ist und wobei das erste obere Befestigungselement (10) eine Anschlagoberfläche (14) umfasst, die angepasst ist, um den Eingriffsabschnitt (12) zu hindern, um die Schwenkachse (A) herum geschwenkt zu werden, wenn das erste untere Befestigungselement (11) an dem unteren Abschnitt (41) des Fahrzeugs (4) befestigt ist.

11. Lastträger (2) nach den Ansprüchen 8, 9 oder 10, wobei das erste obere Befestigungselement (10) und/oder der Eingriffsabschnitt (12) derart angepasst ist, dass dem Eingriffsabschnitt (12) nur erlaubt ist, um die Schwenkachse (A) herum geschwenkt zu werden, um dadurch das erste obere Befestigungselement (10) von dem Fahrzeug (4) zu lösen, wenn das erste obere Befestigungselement (10) durch Bewegen des ersten unteren Befestigungselements (11) weg von dem Fahrzeug (4) geschwenkt wird.

12. Lastträger (2) nach einem der Ansprüche 4 bis 11, wobei das obere Griffelement (13) an dem ersten oberen Befestigungselement (10) und/oder der Befestigungsanordnung (1) starr angebracht ist oder einen integrierten Teil dieses/r darstellt.

13. Lastträger (2) nach einem der vorstehenden Ansprüche, umfassend ein zweites oberes Befestigungselement (10') zum Befestigen des Lastträgers an dem oberen Abschnitt (40) des Fahrzeugs (4), wobei das zweite obere Befestigungselement (10') von dem ersten oberen Befestigungselement (10) versetzt bereitgestellt ist, wie in einer transversalen Richtung der Befestigungsanordnung (1) gesehen, und wobei das zweite obere Befestigungselement (10') vorzugsweise als das erste obere Befestigungselement (10) konfiguriert ist.

14. Lastträger (2) nach einem der vorstehenden Ansprüche, wobei der Lastträger ein Fahrradträger ist.

15. Fahrzeug (1), umfassend eine nach hinten gewandte Tür oder Klappe (3), einen oberen Abschnitt (40) und einen unteren Abschnitt (41) an der nach hinten gewandten Tür oder Klappe und ferner umfassend den Lastträger (2) nach einem der vorstehenden Ansprüche.

## Revendications

1. Porte-charge (2) pour un véhicule (4) comprenant un agencement de fixation (1) pour fixer le porte-charge (2) au niveau d'une portière ou d'un hayon faisant face vers l'arrière (3) du véhicule (4), l'agencement de fixation (1) comprenant,
- un premier élément de fixation supérieur (10) pour fixer le porte-charge à une partie supérieure (40) du véhicule au niveau de la portière ou du hayon faisant face vers l'arrière, dans lequel la partie supérieure est un becquet arrière de véhicule,
- un premier élément de fixation inférieur (11) pour fixer le porte-charge à une partie inférieure (41) du véhicule au niveau de la portière ou du hayon faisant face vers l'arrière, la partie inférieure (41) étant fournie en dessous de la partie supérieure (40), comme on l'observe dans une direction verticale (z) du véhicule, dans lequel le premier élément de fixation supérieur (10) est fourni au-dessus du premier élément de fixation inférieur (11), comme on l'observe le long d'une direction verticale (z) de l'agencement de fixation (1), qui correspond à la direction verticale (z) du véhicule (4) lorsque l'agencement de fixation (1) y est fixé,
dans lequel l'agencement de fixation (1) comprend en outre une partie de mise en prise (12) étant conçue pour venir en prise avec une première surface (401) de la partie supérieure (40) du véhicule (4) lorsque l'agencement de fixation (1) est fixé au véhicule (4), dans lequel la partie de mise en prise (12) est conçue en outre pour venir en prise avec la première surface (401) de sorte que l'agencement de fixation (1) est empêché d'être déplacé vers le haut dans la direction verticale (z) lorsque l'agencement de fixation (1) est fixé au véhicule (4),
**caractérisé en ce que,**
le premier élément de fixation inférieur (11) est formé pour enfermer un bord vertical de la partie inférieure (41) du véhicule (4) lorsqu'il y est fixé, de sorte que le premier élément de fixation inférieur (11) empêche l'agencement de fixation (1) de se déplacer dans au moins une direction transversale (y) du véhicule (4) lorsqu'il est fixé au véhicule (4).

2. Porte-charge (2) selon la revendication 1, dans lequel la partie de mise en prise (12) fait partie du premier élément de fixation supérieur (10).

3. Porte-charge (2) selon l'une quelconque des revendications précédentes, dans lequel la partie de mise en prise (12) comprend une première surface antagoniste (121) conçue pour venir en prise avec la première surface (401), dans lequel la première surface antagoniste (121) est conçue pour faire face à la première surface (401) au moins partiellement vers le haut dans la direction verticale (z) lorsque l'agencement de fixation (1) est fixé au véhicule (4).

4. Porte-charge (2) selon l'une quelconque des revendications précédentes, dans lequel le premier élément de fixation supérieur (10) comprend un élément d'accrochage supérieur (13) pour s'accrocher sur une deuxième surface (402) de la partie supérieure (40) du véhicule (4), la deuxième surface (402) étant espacée de la première surface (401) et/ou étant orientée dans une direction différente par rapport à la première surface (401), dans lequel l'élément d'accrochage supérieur (13) est conçu pour s'accrocher à la deuxième surface (402) de sorte que l'agencement de fixation (1) est suspendu sur le véhicule (4) par l'intermédiaire du premier élément de fixation supérieur (10).

5. Porte-charge (2) selon la revendication 4, dans lequel l'élément d'accrochage supérieur (13) est un élément de crochet.

6. Porte-charge (2) selon l'une quelconque des revendications 4 à 5, dans lequel au moins un parmi l'élément d'accrochage supérieur (13) et la partie de mise en prise (12) est ajustable en permettant un mouvement de translation entre l'élément d'accrochage supérieur (13) et la partie de mise en prise (12) et/ou en permettant un mouvement de pivotement autour d'un axe de pivotement (A) par rapport à l'élément d'accrochage supérieur (13).

7. Porte-charge (2) selon la revendication 6, dans lequel le premier élément de fixation supérieur (10) est conçu pour être serré à la partie supérieure (40) du véhicule (4) en ajustant au moins un parmi l'élément d'accrochage supérieur (13) et la partie de mise en prise (12).

8. Porte-charge (2) selon l'une quelconque des revendications 6 à 7, dans lequel la partie de mise en prise (12) est formée pour enfermer un bord (403) de la partie supérieure (40), telle que formée sensiblement en L.

9. Porte-charge (2) selon la revendication 8, dans lequel la partie de mise en prise (12) comprend en outre une deuxième surface antagoniste (122) conçue pour venir en prise avec une troisième surface (404) de la partie supérieure (40), dans lequel la deuxième surface antagoniste (122) est conçue pour faire face à la troisième surface (404) au moins partiellement vers le bas le long de la direction verticale (z) lorsque l'agencement de fixation (1) est fixé au véhicule (4).

10. Porte-charge (2) selon l'une quelconque des revendications 6 à 9, dans lequel la partie de mise en prise (12) est ajustable en permettant un mouvement de pivotement autour de l'axe de pivotement (A) par rapport à l'élément d'accrochage supérieur (13), et dans lequel le premier élément de fixation supérieur (10) comprend une surface d'arrêt (14) conçue pour empêcher la partie de mise en prise (12) d'être pivotée autour de l'axe de pivotement (A) lorsque le premier élément de fixation inférieur (11) est fixé à la partie inférieure (41) du véhicule (4).

11. Porte-charge (2) selon les revendications 8, 9 ou 10, dans lequel le premier élément de fixation supérieur (10) et/ou la partie de mise en prise (12) sont conçus de telle sorte que la partie de mise en prise (12) ne peut être pivotée qu'autour de l'axe de pivotement (A), pour libérer de ce fait le premier élément de fixation supérieur (10) par rapport au véhicule (4), lorsque le premier élément de fixation supérieur (10) est pivoté en déplaçant le premier élément de fixation inférieur (11) à l'écart du véhicule (4).

12. Porte-charge (2) selon l'une quelconque des revendications 4 à 11, dans lequel l'élément d'accrochage supérieur (13) est solidarisé à ou constitue une pièce solidaire du premier élément de fixation supérieur (10) et/ou de l'agencement de fixation (1).

13. Porte-charge (2) selon l'une quelconque des revendications précédentes, comprenant un deuxième élément de fixation supérieur (10') pour fixer le porte-charge à la partie supérieure (40) du véhicule (4), dans lequel le deuxième élément de fixation supérieur (10') est fourni décalé du premier élément de fixation supérieur (10), comme on l'observe dans une direction transversale de l'agencement de fixation (1), et dans lequel le deuxième élément de fixation supérieur (10') est de préférence configuré comme le premier élément de fixation supérieur (10).

14. Porte-charge (2) selon l'une quelconque des revendications précédentes, dans lequel le porte-charge est un porte-bicyclette.

15. Véhicule (1) comprenant une portière ou un hayon (3) faisant face vers l'arrière, une partie supérieure (40) et une partie inférieure (41) au niveau de la portière ou du hayon faisant face vers l'arrière, et comprenant en outre le porte-charge (2) selon l'une quelconque des revendications précédentes.
